(19) Europäisches Patentamt
European Patent Office
Office européen des brevets

(11) **EP 4 439 402 A1**

(12) **EUROPEAN PATENT APPLICATION**

(43) Date of publication:
**02.10.2024 Bulletin 2024/40**

(21) Application number: **23208163.8**

(22) Date of filing: **07.11.2023**

(51) International Patent Classification (IPC):
*G06N 5/022* (2023.01)    *G06N 5/045* (2023.01)
*G06N 7/01* (2023.01)    *G06N 20/00* (2019.01)

(52) Cooperative Patent Classification (CPC):
**G06N 5/022; G06N 5/045; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 US 202318194613**

(71) Applicant: **FUJITSU LIMITED**
**Kawasaki-shi, Kanagawa 211-8588 (JP)**

(72) Inventors:
- **MALUR SRINIVASAN, Ramya**
  **Sunnyvale, California, 94085 (JP)**
- **UCHINO, Kanji**
  **Sunnyvale, California, 94085 (JP)**

(74) Representative: **Hoffmann Eitle**
**Patent- und Rechtsanwälte PartmbB**
**Arabellastraße 30**
**81925 München (DE)**

(54) **DETECTION OF ALGORITHMIC MONOCULTURE BASED ON ESTIMATION OF CAUSAL EFFECT ON COMPUTING ALGORITHM**

(57) In an embodiment, a dataset associated with a domain is received. Further, domain knowledge information associated with the received dataset is encoded. Next, a structural causal model (SCM) associated with the dataset is constructed for a computing algorithm related to the domain, based on the encoded domain knowledge information. Further, a mediator variable and a confounder variable associated with the computing algorithm is identified based on the constructed SCM. Next, a causal effect associated with the computing algorithm is estimated based on the identified mediator variable and the identified confounder variable. Additionally, whether the computing algorithm suffers from an algorithmic monoculture is determined based on the estimated causal effect, to detect bias in the computing algorithm. Thereafter, information indicative of whether the computing algorithm suffers from the algorithmic monoculture is rendered.

FIG. 1

EP 4 439 402 A1

**Description**

FIELD

The embodiments discussed in the present disclosure are related to detection of algorithmic monoculture based on estimation of causal effect on computing algorithm.

BACKGROUND

Advancements in the field of data science have led to the development of a number of machine learning (ML) algorithms. Such ML algorithms may be used for development of artificial intelligence (AI) models, software applications, and the like. Often, a particular ML algorithm may be preferred by users and developers for a certain application area and thereby employed in a number of applications that may lead to algorithmic monoculture for the application area. In computer science, monoculture may refer to computers running a same software or algorithm for a certain application area. Thus, such computes may be susceptible to similar vulnerabilities, which may be attributable to the use of a common software/algorithm. Often, the ML algorithms may be applied to screen job applicants, lend an asset to an appropriate borrower, and the like. Thus, concerns may be raised about the effects of algorithmic monoculture, wherein several decision-makers may rely on the same ML algorithm for decision-making. The presence of algorithmic monoculture in software used for decision-making may reduce an overall quality of the decisions being made by the decision-makers. Moreover, the presence of algorithmic monoculture may reduce an accuracy of the decisions being made due to unexpected results even under normal circumstances. Furthermore, the algorithmic monoculture may lead to outcome homogenization based on generation of a same decision for a similar dataset, although the decision may not be correct. Thus, algorithmic monoculture may give rise to ethical concerns.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of an embodiment, a method may include a set of operations which may include receiving a dataset associated with a domain. The set of operations may further include encoding domain knowledge information associated with the received dataset. The set of operations may further include constructing, for a computing algorithm related to the domain, a structural causal model (SCM) associated with the dataset based on the encoded domain knowledge information. The set of operations may further include identifying a mediator variable and a confounder variable associated with the computing algorithm, based on the constructed SCM. The set of operations may further include estimating a causal effect associated with the computing algorithm, based on the identified mediator variable and the identified confounder variable. The set of operations may further include determining whether the computing algorithm suffers from an algorithmic monoculture, based on the estimated causal effect, to detect bias in the computing algorithm. The set of operations may further include rendering information indicative of whether the computing algorithm suffers from the algorithmic monoculture.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an example environment related to detection of algorithmic monoculture based on estimation of causal effect on computing algorithm;
FIG. 2 is a block diagram that illustrates an exemplary electronic device for detection of algorithmic monoculture based on estimation of causal effect on computing algorithm;
FIG. 3 is a diagram that illustrates an execution pipeline for detection of algorithmic monoculture based on estimation of causal effect on computing algorithm;
FIG. 4 is a diagram that illustrates a flowchart of an example method for estimation of causal effect on computing algorithm; and

FIG. 5 is a diagram that illustrates a flowchart of an example method for detection of algorithmic monoculture based on estimation of causal effect on computing algorithm,
all according to at least one embodiment described in the present disclosure.

DESCRIPTION OF EMBODIMENTS

Some embodiments described in the present disclosure relate to methods and systems for detection of algorithmic monoculture based on estimation of causal effect on computing algorithm. In the present disclosure, a dataset associated with a domain may be received. Thereafter, domain knowledge information associated with the received dataset may be encoded. Based on the encoded domain knowledge information, a structural causal model (SCM) associated with the dataset may be constructed for a computing algorithm related to the domain. Based on the constructed SCM, a mediator variable and a confounder variable associated with the computing algorithm may be identified. Based on the identified mediator variable and the identified confounder variable, a causal effect associated with the computing algorithm may be estimated. Thereafter, whether the computing algorithm suffers from an algorithmic monoculture may be determined based on the estimated causal effect, to detect bias in the computing algorithm. Furthermore, information indicative of whether the computing algorithm suffers from the algorithmic monoculture may be rendered.

According to one or more embodiments of the present disclosure, the technological field of Artificial Intelligence (AI) and machine learning models may be improved by configuring a computing system in a manner that the computing system may be able to detect algorithmic monoculture based on estimation of causal effect on a computing algorithm. The computing system may receive a dataset associated with a domain. Further, the computing system may encode domain knowledge information associated with the received dataset. Based on the encoded domain knowledge information, the computing system may construct a structural causal model (SCM) associated with the dataset for a computing algorithm related to the domain. Based on the constructed SCM, the computing system may identify a mediator variable and a confounder variable associated with the computing algorithm. Based on the identified mediator variable and the identified confounder variable, the computing system may estimate a causal effect associated with the computing algorithm. Based on the estimated causal effect, the computing system may determine whether the computing algorithm suffers from an algorithmic monoculture to detect a bias in the computing algorithm. Thereafter, the computing system may render information indicative of whether the computing algorithm suffers from the algorithmic monoculture.

It may be appreciated that, in computer science, monoculture may refer to computers running a same software for a certain application area. Thus, such computes may be susceptible to similar vulnerabilities. For example, a particular ML algorithm may be used in a number of software applications that may lead to algorithmic monoculture. Such ML algorithms may be applied to screen job applicants or evaluate a borrower to before lending an asset to the borrower, and the like. Thus, concerns may be raised about the effects of algorithmic monoculture, in which several decision-makers may rely on the same ML algorithm. The prevenance of algorithmic monoculture may reduce an overall quality of the decisions being made by the decision-makers and accuracy of the decisions being made by the decision-makers. Furthermore, the algorithmic monoculture may lead to outcome homogenization. Thus, algorithmic monoculture may give rise to ethical concerns.

Conventional techniques of detection of algorithmic monoculture may primarily focus on determination of biases in datasets and algorithms. Such techniques may not determine causes due to which models may have been reused. Thus, such conventional techniques on understanding biases in dataset may not determine causes behind the prevalence of algorithmic monoculture. Thus, there is a need to mitigate ethical concerns associated with the algorithmic monoculture. The disclosed system, on the other hand, discloses a framework for the detection of bias in computing algorithms due to issues related to popularity bias, which in-turn may be affected by factors such as, endorsement of the computing algorithm by famous people, a familiarity of the computing algorithm as reflected by citations, and the like. The disclosed system may identify sources of ethical concerns. Furthermore, the disclosed system may disentangle or separate genuine ethical concerns from other acceptable issues such as software portability, open-source codes, and the like, that may favor one computing algorithm over another computing algorithm.

Embodiments of the present disclosure are explained with reference to the accompanying drawings.

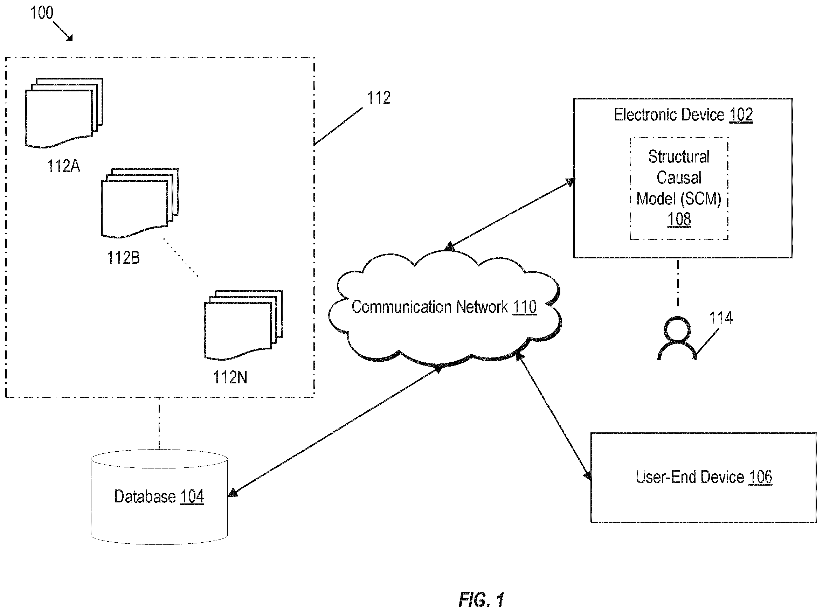

FIG. 1 is a diagram representing an example environment related to detection of algorithmic monoculture based on estimation of causal effect on computing algorithm, arranged in accordance with at least one embodiment described in the present disclosure. With reference to FIG. 1, there is shown an environment 100. The environment 100 may include an electronic device 102, a database 104, a user-end device 106, and a communication network 110. The electronic device 102, the database 104, and the user-end device 106 may be communicatively coupled to each other, via the communication network 110. The electronic device 102 may include a structural causal model (SCM) 108. In FIG. 1, there is further shown a user 114 who may be associated with and/or operate the electronic device 102 and/or the user-end device 106. There is further shown a plurality of datasets 112 that may be associated with a plurality of application domains. The plurality of application domains may include a first application domain, a second application domain, ...and an Nth application domain. The plurality of datasets 112 may include a first dataset 112A associated with the first application domain, a second dataset 112B associated with the second application domain, ...and a Nth dataset 112N associated with the Nth application domain. The plurality of datasets 112 may be stored in the database 104.

The N number of datasets shown in FIG. 1 is presented merely as an example. The plurality of datasets 112 may include only two or more than N datasets, without deviation from the scope of the disclosure. For the sake of brevity, only N datasets have been shown in FIG. 1. However, in some embodiments, there may be more than N datasets, without limiting the scope of the disclosure.

Though the SCM 108 is shown as included or stored on the electronic device 102, the SCM 108 may be deployed or stored on separate devices, such as, a server (not shown in FIG. 1), the database 104, or the user-end device 106, without departure from the scope of the disclosure.

The electronic device 102 may include suitable logic, circuitry, interfaces, and/or code that may be configured to detect algorithmic monoculture based on estimation of causal effect on computing algorithm, as described herein. In certain embodiments, the electronic device 102 may be configured to store the SCM 108, as shown in FIG. 1.

The electronic device 102 may be configured to receiving a dataset (such as, the first dataset 112A associated with a domain. The electronic device 102 may be configured to encode domain knowledge information associated with the received dataset. The electronic device 102 may be configured to construct, for a computing algorithm related to the domain, the structural causal model (SCM) 108 associated with the dataset based on the encoded domain knowledge information. The electronic device 102 may be configured to identify a mediator variable and a confounder variable associated with the computing algorithm, based on the constructed SCM 108. The electronic device 102 may be configured to estimate a causal effect associated with the computing algorithm, based on the identified mediator variable and the identified confounder variable. The electronic device 102 maybe configured to determine whether the computing algorithm suffers from an algorithmic monoculture, based on the estimated causal effect, to detect bias in the computing algorithm. The electronic device 102 may be configured to render information indicative of whether the computing algorithm suffers from the algorithmic monoculture.

Examples of the electronic device 102 may include, but are not limited to, a causality analysis machine, a meta-learning machine, a mobile device, a desktop computer, a laptop, a computer workstation, a computing device, a mainframe machine, a server, such as a cloud server, and a group of servers. In one or more embodiments, the electronic device 102 may include a user-end terminal device and a server communicatively coupled to the user-end terminal device. The electronic device 102 may be implemented using hardware including a processor, a microprocessor (e.g., to perform or control performance of one or more operations), a field-programmable gate array (FPGA), or an application-specific integrated circuit (ASIC). In some other instances, the electronic device 102 may be implemented using a combination of hardware and software.

The database 104 may include suitable logic, interfaces, and/or code that may be configured to store the plurality of datasets 112. In certain embodiments, the SCM 108 may be stored on the database 104. The database 104 may be derived from data off a relational or non-relational database, or a set of comma-separated values (csv) files in conventional or big-data storage.

The database 104 may be stored or cached on a device, such as a server or the electronic device 102. The device storing the database 104 may be configured to receive a query for a dataset (e.g., the first dataset 112A) of the plurality of datasets 112 from the electronic device 102. In response, the device of the database 104 may be configured to retrieve and provide the queried dataset (e.g., the first dataset 112A) to the electronic device 102 based on the received query. In some embodiments, the database 104 may be hosted on a plurality of servers stored at same or different locations. The operations of the database 104 may be executed using hardware including a processor, a microprocessor (e.g., to perform or control performance of one or more operations), a field-programmable gate array (FPGA), or an application-specific integrated circuit (ASIC). In some other instances, the database 104 may be implemented using software.

The user-end device 106 may include suitable logic, circuitry, interfaces, and/or code that may be configured to render, on a display device (associated with the user-end device 106), information indicative of whether the computing algorithm suffers from the algorithmic monoculture. For example, the user-end device 106 may include a web-client software or an electronic mail software, through which the user-end device 106 may receive the plurality of datasets 112. As an example, each of the plurality of datasets 112 may be a comma-separated value (csv) data file. Additionally, or alternatively, the user-end device 106 may include a spreadsheet software that may be used to generate or edit the plurality of datasets 112. The user-end device 106 may upload the generated, edited, or received plurality of datasets 112 to the electronic device 102. In addition, the user-end device 106 may upload the plurality of datasets 112 to the database 104 for storage. The user-end device 106 may receive (for example, from the user 114) a first user input indicative of a feature dependency information corresponding to the SCM 108. The user-end device 106 may transmit the received first user input to the electronic device 102. Examples of the user-end device 106 may include, but are not limited to, a mobile device, a desktop computer, a laptop, a computer workstation, a computing device, a mainframe machine, a server, such as a cloud server, and a group of servers. Although in FIG. 1, the user-end device 106 is separated from the electronic device 102; however, in some embodiments, the user-end device 106 may be integrated in the electronic device 102, without a deviation from the scope of the disclosure.

The SCM 108 may include suitable logic, circuitry, interfaces, and/or code that may be configured to represent causal relationships between variables associated with a dataset of the plurality of datasets 112. For example, the SCM 108 may correspond to a directed acyclic graph that may represent variables associated with the first dataset 112A. The directed acyclic graph may be indicative of a causal effect of a set of input variables associated with the first dataset 112A on a set of output variables associated with the first dataset 112A. In addition, the directed acyclic graph may further include a set of unobserved variables that affect a set of input variables associated with the first dataset.

In an embodiment, the SCM 108 may be a represented as a 4-tuple data structure. Four elements of the SCM108 may be a set of exogenous variables "U", a set of endogenous or observed variables "V", a set of structural functions "F", and a distribution "P(u)" over the set of exogenous variables "U". The set of endogenous or observed variables "V" may include, a first variable "V1", a second variable "V2", ... and an Nth variable "Vn", The set of structural functions "F" may include a first structural function "F1", a second structural function "F2" ... and an Nth structural functions "Fn". The set of structural functions "F" may be functions to determine each variable of the set of endogenous or observed variables "V". Each variable of the set of endogenous or observed variables "V" may be determined according to an expression (1):

$$V_i \leftarrow f_i(\mathrm{pa}(V_i), U_i), \text{where } \mathrm{pa}(V_i) \subseteq V \backslash V_i \text{ and } U_i \subseteq U \qquad (1)$$

where "$V_i$" may represent an ith endogenous variable of the set of endogenous variables "V", "$U_i$" may represent an ith exogenous variable of the set of exogenous variables "U", and "pa($V_i$)" is a parent variable of the ith endogenous variable "$V_i$". It may be noted that the parent variable may be directly related to a child variable and an ancestor variable may be a parent of the parent variable.

For example, "pa($V_i$)" and "an($V_i$)" may represent a parent variable and an ancestor variable of the ith endogenous variable "$V_i$". For the SCM 108, an outcome "Y" may be regarded as fair with respect to a variable "X", based on a direct effect, an indirect effect, and a spurious effect of the variable "X" on the outcome "Y".

The direct effect (DE) may be determined according to an expression (2):

$$\mathrm{Direct\ effect}(\mathrm{DE\ fair}_X(Y), for\ short)\ if\ and\ only\ if\ X \notin pa(Y) \qquad (2)$$

where "$pa(Y)$" may be a parent of the outcome "Y". Thus, the outcome "Y" may be fair with respect to direct effect if the outcome "Y" may not be directly connected to the variable "X" or the variable "V" may not be a parent of the outcome "Y".

The indirect effect (IE) may be determined according to an expression (3):

$$\mathrm{Indirect\ effect\ (IE\ fair}_X(Y), for\ short)\ if\ and\ only\ if\ X \notin an(pa(Y)) \qquad (3)$$

where "$an(pa(Y))$" may be an ancestor of the outcome "Y". Thus, the outcome "Y" may be fair with respect to indirect effect if the outcome "Y" may not be indirectly connected to the variable "X" or the variable "V" may not be the ancestor of the outcome "Y".

The spurious effect (SE) may be determined according to an expression (4):

$$\mathrm{Spurious\ effect\ (SE\ fair}_X(Y), for\ short)\ if\ and\ only\ if\ U_X \cap an(Y) \qquad (4)$$

$$= \emptyset\ and\ an(X) \cap an(Y) = \emptyset$$

where "$an(Y)$" may be the ancestor of the outcome "Y" and the "$an(X)$" be the ancestor of the variable "X". Thus, the outcome "Y" may be fair with respect to spurious effect, if none of the ancestors of the outcome "Y" may be from the set of exogenous variables "U" and none of the ancestors of the variable "X" may be the ancestor of the outcome. "Y".

The communication network 110 may include a communication medium through which the electronic device 102 may communicate with the server(s) or device(s) that may store the database 104, and the user-end device 106. Examples of the communication network 110 may include, but are not limited to, the Internet, a cloud network, a Wireless Fidelity (Wi-Fi) network, a Personal Area Network (PAN), a Local Area Network (LAN), a cellular network (such as, a Long-term evolution (or 4G) cellular network or a 5G cellular network), a satellite network (such as, a network of low earth orbit satellites), and/or a Metropolitan Area Network (MAN). Various devices in the environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

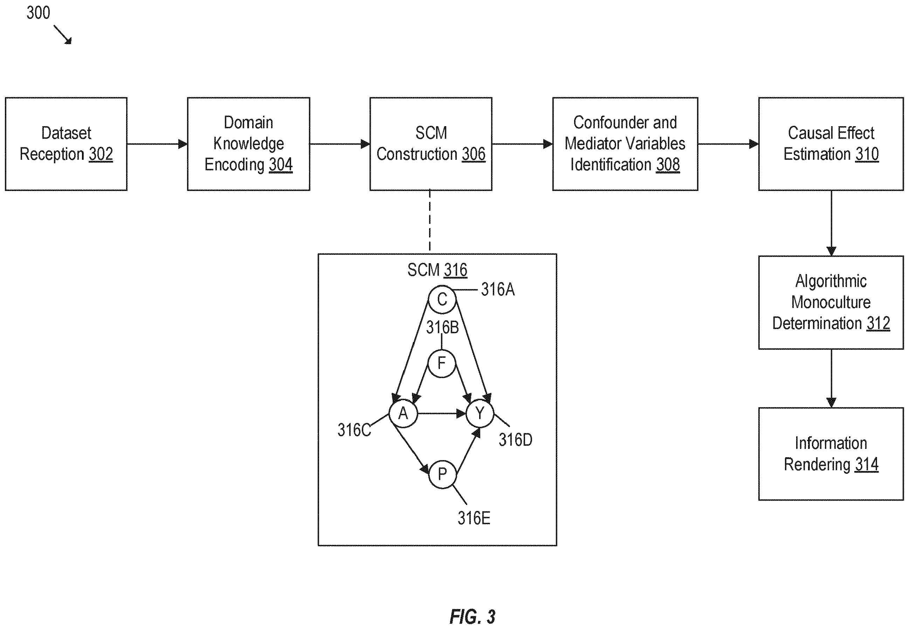

In operation, the electronic device 102 may receive the dataset associated with the domain. For example, the first dataset 112A associated with the domain may be received. Details related to reception of the dataset are further provided, for example, in FIG. 3 (at 302).

The electronic device 102 may encode domain knowledge information associated with the received dataset. In an embodiment, the electronic device 102 may determine information associated with an observed variable and an unobserved variable associated with the domain. The electronic device 102 may identify an input variable and an output variable associated with a problem area associated with the domain. Thereafter, the electronic device 102 may encode the domain knowledge information based on the determined information associated with the observed variable and the unobserved variable and the identified input variable and the output variable. Details related to the encoding of the received dataset are further provided, for example, in FIG. 3 (at 304).

The electronic device 102 may construct, for the computing algorithm related to the domain, the structural causal model (SCM) 108 associated with the dataset based on the encoded domain knowledge information. In an embodiment, the SCM 108 may correspond to a directed acyclic graph that may indicate interdependencies in variables associated with the computing algorithm, based on the encoded domain knowledge information. Details related to SCM 108 are further provided, for example, in FIG. 3 (at 306).

The electronic device 102 may identify the mediator variable and the confounder variable associated with the computing algorithm, based on the constructed SCM 108. In an embodiment, the mediator variable may be a variable that may affect the input variable associated with the computing algorithm, and the confounder variable may be a variable that may affect the input variable and the output variable associated with the computing algorithm. Details related to the mediator variable and the confounder variable are further provided, for example, in FIG. 3 (at 308).

The electronic device 102 may estimate the causal effect associated with the computing algorithm, based on the identified mediator variable and the identified confounder variable. Details related to the causal effect estimation are further provided, for example, in FIG. 3 (at 310).

The electronic device 102 may determine whether the computing algorithm suffers from the algorithmic monoculture, based on the estimated causal effect, to detect bias in the computing algorithm. In an embodiment, the electronic device 102 may determine a natural direct effect (NDE), a natural indirect effect (NDE), and a spurious effect (SE) based on the estimated causal effect, to detect bias in the computing algorithm. The electronic device 102 may determine whether the computing algorithm suffers from the algorithmic monoculture is further based on the determined natural direct effect, the natural indirect effect, and the spurious effect. Details related to the algorithmic monoculture are further provided, for example, in FIG. 3 (at 312).

The electronic device 102 may render information indicative of whether the computing algorithm suffers from the algorithmic monoculture. Herein, the electronic device 102 may control a display associated with the electronic device 102 to notify the user such as, the user 114 in case the computing algorithm suffers from the algorithmic monoculture. Details related to the rendering of the information are further provided, for example, in FIG. 3 (at 314).

The disclosed electronic device 102 may thus enable detection of bias in a computing algorithm due to issues related to popularity bias, which in turn may be affected by factors such as, endorsement of the computing algorithm by famous people, a familiarity of the computing algorithm as reflected by citations, and the like. The disclosed electronic device 102 may identify sources of ethical concerns. Furthermore, the disclosed electronic device 102 may disentangle or separate genuine ethical concerns from other acceptable issues such as, software portability, open-source codes, and the like that may favor one computing algorithm over another computing algorithm.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the electronic device 102 but not the database 104 and the user-end device 106. In addition, in some embodiments, the functionality of each of the database 104 and the user-end device 106 may be incorporated into the electronic device 102, without a deviation from the scope of the disclosure.

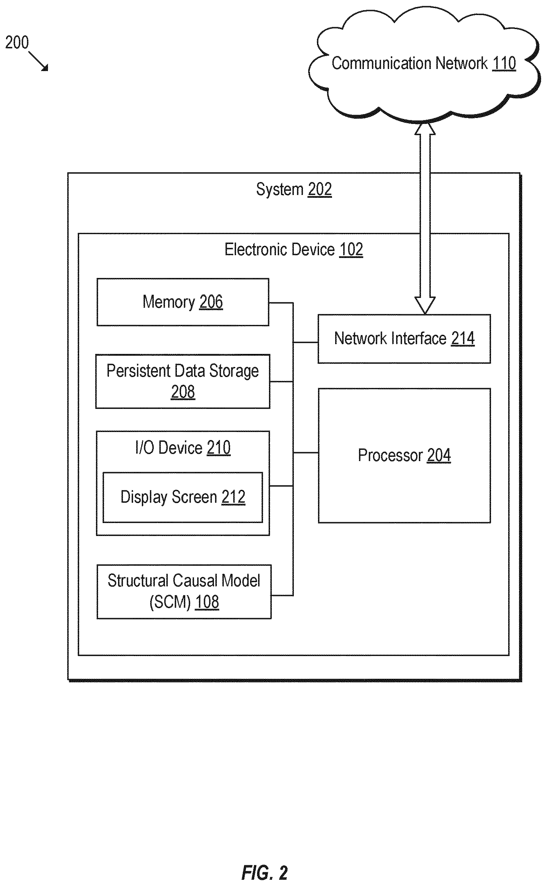

FIG. 2 is a block diagram that illustrates an exemplary electronic device for detection of algorithmic monoculture based on estimation of causal effect on computing algorithm, arranged in accordance with at least one embodiment described in the present disclosure. FIG. 2 is explained in conjunction with elements from FIG. 1. With reference to FIG. 2, there is shown a block diagram 200 of a system 202 including the electronic device 102. The electronic device 102 may include a processor 204, a memory 206, a persistent data storage 208, an input/output (I/O) device 210, a display screen 212, a network interface 214, and the SCM 108.

The processor 204 may include suitable logic, circuitry, and/or interfaces that may be configured to execute program instructions associated with different operations to be executed by the electronic device 102. For example, some of the operations may include the reception of the dataset, encoding of domain knowledge information, SCM construction, identification of the confounder variable and the mediator variable, estimation of causal effect, determination of algorithmic monoculture, and rendering of information indicative of the algorithmic monoculture. The processor 204 may include any suitable special-purpose or general-purpose computer, computing entity, or processing device including various computer hardware or software modules and may be configured to execute instructions stored on any applicable computer-readable storage media. For example, the processor 204 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 204 may include any number of processors configured to, individually or collectively, perform or direct performance of any number of operations of the electronic device 102, as described in the present disclosure. Additionally, one or more of the processors may be present on one or more different electronic devices, such as different servers. In some embodiments, the processor 204 may be configured to interpret and/or execute program instructions and/or process data stored in the memory 206 and/or the persistent data storage 208. In some embodiments, the processor 204 may fetch program instructions from the persistent data storage 208 and load the program instructions in the memory 206. After the program instructions are loaded into the memory 206, the processor 204 may execute the program instructions. Some of the examples of the processor 204 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 206 may include suitable logic, circuitry, interfaces, and/or code that may be configured to store program instructions executable by the processor 204. In certain embodiments, the memory 206 may be configured to store operating systems and associated application-specific information. The memory 206 may include computer-readable storage media for carrying or having computer-executable instructions or data structures stored thereon. Such computer-readable storage media may include any available media that may be accessed by a general-purpose or special-purpose computer, such as the processor 204. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204 to perform a certain operation or group of operations associated with the electronic device 102.

The persistent data storage 208 may include suitable logic, circuitry, interfaces, and/or code that may be configured to store program instructions executable by the processor 204, operating systems, and/or application-specific information, such as logs and application-specific databases. The persistent data storage 208 may include computer-readable storage media for carrying or having computer-executable instructions or data structures stored thereon. Such computer-readable storage media may include any available media that may be accessed by a general-purpose or a special-purpose computer, such as the processor 204.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204 to perform a certain operation or group of operations associated with the electronic device 102.

In some embodiments, either of the memory 206, the persistent data storage 208, or combination may store the received plurality of datasets 112. Either of the memory 206, the persistent data storage 208, or combination may further store the SCM 108.

The I/O device 210 may include suitable logic, circuitry, interfaces, and/or code that may be configured to receive a user input. For example, the I/O device 210 may receive the first user input corresponding to the feature dependency information. The I/O device 210 may render information indicative of whether the computing algorithm suffers from the algorithmic monoculture on the display screen 212. The I/O device 210 may include various input and output devices, which may be configured to communicate with the processor 204 and other components, such as the network interface 214. Examples of the input devices may include, but are not limited to, a touch screen, a keyboard, a mouse, a joystick, and/or a microphone. Examples of the output devices may include, but are not limited to, a display (e.g., the display screen 212) and a speaker.

The display screen 212 may comprise suitable logic, circuitry, interfaces, and/or code that may be configured to display the information indicative of whether the computing algorithm suffers from the algorithmic monoculture. The display screen 212 may be configured to receive the user inputs (e.g., the first user input) from the user 114. In such cases the display screen 212 may be a touch screen to receive the user inputs. The display screen 212 may be realized through several known technologies such as, but not limited to, a Liquid Crystal Display (LCD) display, a Light Emitting Diode (LED) display, a plasma display, and/or an Organic LED (OLED) display technology, and/or other display technologies.

The network interface 214 may comprise suitable logic, circuitry, interfaces, and/or code that may be configured to establish a communication between the electronic device 102, the server/device of the database 104, and the user-end device 106, via the communication network 110. The network interface 214 may be implemented by use of various known technologies to support wired or wireless communication of the electronic device 102, via the communication network 110. The network interface 214 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

Modifications, additions, or omissions may be made to the example electronic device 102 without departing from the scope of the present disclosure. For example, in some embodiments, the example electronic device 102 may include any number of other components that may not be explicitly illustrated or described for the sake of brevity.

FIG. 3 is a diagram that illustrates an execution pipeline for detection of algorithmic monoculture based on estimation of causal effect on computing algorithm, in accordance with an embodiment of the disclosure. FIG. 3 is described in conjunction with elements from FIG. 1 and FIG. 2. With reference to FIG. 3, there is shown an execution pipeline 300. The exemplary execution pipeline 300 may include a set of operations that may be executed by one or more components of FIG. 1, such as, the electronic device 102. The operations may include dataset reception 302, encoding of domain knowledge information 304, SCM construction 306, confounder variable and mediator variable identification 308, causal effect estimation 310, algorithmic monoculture determination 312, and information rendering 314. The exemplary execution pipeline 300 may further include a SCM 316. The SCM 316 may include a first node 316A, a second node 316B, a third node 316C, a fourth node 316D, and a fifth node 316E. The set of operations may be performed by the electronic device 102 for detection of algorithmic monoculture based on estimation of causal effect on computing algorithm, as described herein.

At 302, an operation for dataset reception may be executed. In an embodiment, the processor 204 may be configured to receive a dataset associated with a domain. For example, the processor 204 may receive the first dataset 112A, which may correspond to a banking domain associated with a first location. In certain scenarios, the processor 204 may receive the first dataset 112A from the database 104. On receipt of the first dataset 112A, the processor 204 may store the received first dataset 112A in the memory 206 (and/or the persistent data storage 208). In another scenario, the plurality of datasets 112 may be pre-stored in the memory 206 (and/or the persistent data storage 208) and the processor 204 may retrieve the pre-stored first dataset 112A from the memory 206 (and/or the persistent data storage 208).

At 304, an operation for domain knowledge encoding may be executed. In an embodiment, the processor 204 may be configured to encode the domain knowledge information associated with the received dataset. Herein, a user input from an expert user such as, the user 114 may be received for encoding the domain knowledge information. In an embodiment, the processor 204 may be configured to determine information associated with an observed variable and an unobserved variable associated with the domain. The processor 204 may be configured to identify an input variable and an output variable associated with a problem area associated with the domain, based on the user input. The encoding of the domain knowledge information may be further based on the determined information associated with the observed variable and the unobserved variable and the identified input variable and the output variable. The observed variable may be a measurement that may be observed directly, and the unobserved variable may be the variable that may be inferred indirectly from a mathematical model of observed variables. The input variable, also known as a policy variable, an exposure variable or a treatment variable, may be a variable whose effect on another variable may be needed to be determined. The output variable, also known as the outcome variable, may be a variable upon which a causal effect of the input variable may need to be determined. In an example, the problem area may be to "determine the effect of poverty on anger issues of a person". It may be noted that poverty may directly related to anger. That is, poverty may drive a person to become angry. Thus, poverty may be regarded as input variable and anger may regarded as the output variable.

In an embodiment, the processor 204 may be configured to determine feature dependency information associated with received dataset such as, the first dataset 112A, based on a user input. In an embodiment, the feature dependency information may include at least one of, but not limited to, a set of input variables associated with the received dataset, a set of output variables associated with the received dataset, dependency information associated with the set of input variables and the set of output variables, or a confidence level associated with the dependency information. For example, the processor 204 may receive the user input that may include a set of input variables and a set of output variables associated with received dataset such as, the first dataset 112A. As an example, in case the received dataset such as, the first dataset 112A is related to a banking domain, then the set of input variables may include an income variable, an age variable, a gender variable, and a credit score variable. Further, in such cases, the set of output variables may include a loan decision variable. The received user input may further include dependency information associated with the set of input variables and the set of output variables. The dependency information may indicate whether a certain input variable of the set of input variables affects a particular output variable of the set of output variable. Also, the received user input may include a confidence level associated with the dependency information. The confidence level associated with the dependency information may indicate a level of certainty that the user 114 may have towards the dependency information. In other words, a higher confidence level may indicate the user 114 may have a high confidence that a certain input variable affects a certain output variable of the first dataset 112A. For example, the user 114 may have a 90% confidence level that the income and credit score of an individual (two input variables) may affect the loan decision output (an output variable) associated with the received dataset such as, the first dataset 112A corresponding to the banking domain. Thus, in current case, the dependency information may indicate that the income variable and the credit score variable may be affect the loan decision variable and there may be a 90% confidence level associated with such dependency information.

The user input may be received from an expert user (such as, the user 114), who may have a domain-knowledge associated with one or more of the pluralities of application domains. For example, the expert user may be a financial consultant with knowledge of the banking domain. Also, as the user input may include the confidence level associated with the dependency information, a degree of reliability of the dependency information may be quantifiable. Therefore, the user input (from the expert user) may be accurate and useful to determine the feature dependency information. The domain knowledge information associated with the received dataset may be encoded based on the received user input.

At 306, an operation for SCM construction may be executed. In an embodiment, the processor 204 may be configured to construct, for the computing algorithm related to the domain, the structural causal model (SCM) 316 associated with the dataset based on the encoded domain knowledge information. The SCM 316 may be related to the received dataset such as, the first dataset 112A. In an embodiment, the SCM 316 may correspond to a directed acyclic graph that may indicate interdependencies in variables associated with the computing algorithm, based on the encoded domain knowledge information. The directed acyclic graph of the SCM 316 may include a plurality of nodes such as, a set of first nodes, a set of second nodes, and a set of third nodes. The directed acyclic graph may be indicative of a causal effect of a set of input variables associated with the received dataset such as, the first dataset 112A, on a set of output variables associated with the received dataset such as, the first dataset 112A.

As discussed, a domain expert or an expert user (e.g., the user 114) may be associated with the domain. The domain expert (or expert user) associated with the domain may have domain knowledge related to the particular domain. Based on the domain knowledge known to the expert user (such as, the user 114), the processor 204 may receive the first user input corresponding to the feature dependency information from the domain expert (e.g., from the user 114) associated with the particular domain. For example, the domain expert may provide a user input, which may include an input variable and an output variable associated with the received dataset of the domain of the domain expert, dependencies between the input variable and the output variable, and a confidence level associated with the dependencies. The processor 204 may determine the SCM 316 for the domain based on the feature dependency information. In an embodiment, the user input may indicate nodes of the SCM 316 associated with the received dataset (e.g., the first dataset 112A). The user input may further include dependency information between the nodes of the SCM 316. The dependency information may be represented in the SCM 316 by directed edges between the nodes.

In an embodiment, the SCM 316 may be constructed based on at least one of the computing algorithm associated with the SCM 316, a number of citations of the computing algorithm, a confounder variable associated with the computing algorithm, a probability that the computing algorithm is used, an outcome of the computing algorithm, or a familiarity of the computing algorithm. The number of citations may denote a total number of times the computing algorithm may have been cited in, for example, a research journal. The probability that the computing algorithm is used may denote a probability that the computing algorithm may have been used in applications related to the domain by various users across various platforms. The outcome of the computing algorithm may be an output of the computing algorithm. The familiarity of the computing algorithm may denote whether the computing algorithm is new or familiar to other users associated with the applications related to the domain.

For example, with reference to FIG. 3, the SCM 316 may include the first node 316A, the second node 316B, the third node 316C, the fourth node 316D, and the fifth node 316E. The first node 316A may denote a number of citations "C" of a computing algorithm "A", the second node 316B may denote a familiarity "F" of the computing algorithm "A", and the third node 316C may denote the computing algorithm "A". Further, the fourth node 316D may denote an outcome "Y" of the computing algorithm "A", and the fifth node 316E may denote a probability "P" that the computing algorithm "A" is used. Herein, the computing algorithm "A" may be the input variable and the outcome "Y" may be the output variable.

At block 308, an operation of mediator variable and confounder variable identification maybe executed. In an embodiment, the processor 204 maybe configured to identify the mediator variable and the confounder variable associated with the computing algorithm, based on the constructed SCM 316. In an embodiment, the mediator variable may be a variable that may affect an input variable associated with the computing algorithm, and the confounder variable may be a variable that may affect the input variable and the output variable that is, the outcome "Y" associated with the computing algorithm. That is, the confounding variable may be a common cause of the input variable and the output variable and may cause spurious correlations between the input variable and the output variable.

For example, with reference to FIG. 3, the number of citations "C" and the familiarity "F" may affect both the input variable that is, the computing algorithm "A" and the output variable that is, the outcome "Y". Hence, the number of citations "C" and the familiarity "F" may be confounder variables. For example, if the computing algorithm "A" is highly cited, then researchers may be tempted to use the computing algorithm "A". Therefore, the first node 316A is connected to the third node 316C. That is, a choice of the computing algorithm may be based on the number of citations "C". It may be appreciated that the choice of the computing algorithm "A" may influence the outcome. Hence, the third node 316C may be connected to the fourth node 316D. That is, the number of citations "C" may affect the input variable and the output variable. Therefore, the number of citations "C" may be the confounder variable. Similarly, the familiarity "F" may be also be another confounder variable.

At block 310, an operation of causal effect estimation may be executed. In an embodiment, the processor 204 may be configured to estimate a causal effect associated with the computing algorithm, based on the identified mediator variable and the identified confounder variable. The causal effect may denote a cause-effect relationship between variables. That is, the causal effect may denote that a cause of an occurrence of an outcome may be due to an effect on the variables, such as, the input variable, the mediator variable, and the confounder variable.

In an embodiment, the processor 204 may be configured to determine one or more variables associated with a disparate outcome or a disparate treatment associated with the computing algorithm. The processor 204 may be configured to compute a direct effect, an indirect effect, and a spurious effect of each of the determined one or more variables based on the SCM. The processor 204 may be configured to establish evidence of the disparate outcome or the disparate treatment, based on the computed direct effect, indirect effect, and the spurious effect.

It may be noted that the disparate treatment may depict how changes induced by a treatment, such as, an input variable "X" may affect an outcome "Y". In other words, the disparate treatment may denote how a decision-making criterion of the SCM 316 may change based on changes in the input variable "X". Thus, the disparate treatment may illustrate a direct effect. The disparate outcome, also known as a disparate impact, may illustrate how an outcome "Y" may behave. Further, the disparate outcome may indicate disparities regardless of the treatment. Thus, the disparate outcome may be the result of the computing algorithm. One or more variables associated with the disparate outcome, or the disparate treatment associated with the computing algorithm may be determined. For example, the one or more variables associated with the disparate treatment may the computing algorithm "A". In another example, an unemployment variable may be the disparate treatment for an outcome, such as, poverty, because unemployment may be directly related to poverty.

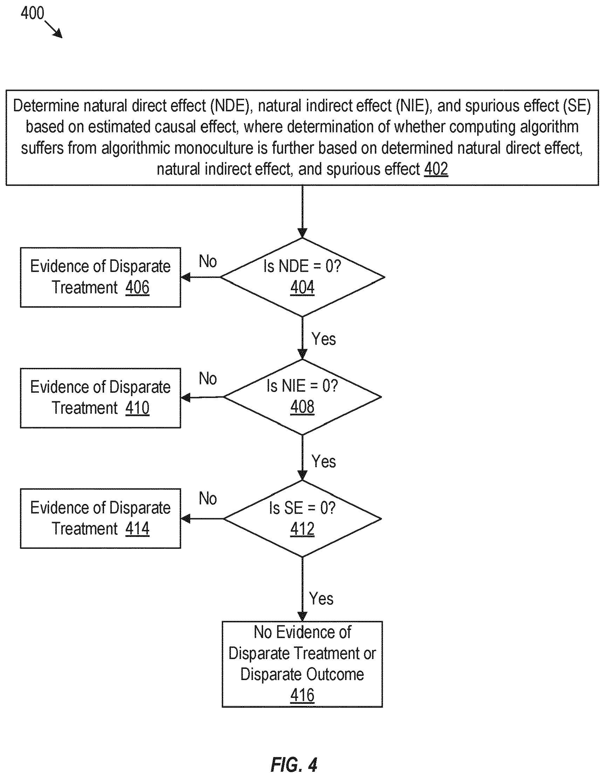

Once the one or more variables associated with the disparate outcome, or the disparate treatment are determined, the processor 204 may compute the direct effect, the indirect effect, and the spurious effect of each of the determined one or more variables based on the SCM 316. The direct effect may illustrate how each of the one more variables directly impact the outcome "Y". The indirect effect may illustrate how each of the one or more variables may indirectly impact the outcome "Y". The indirect effect may thus, illustrate how an intermediate variable, such as, the probability "P" that the computing algorithm "A" is being used, may affect the outcome "Y". The spurious effect may indicate if there is some effect on the outcome "Y through the confounder variable such as, the number of citations "C". Once the computed direct effect, indirect effect, and the spurious effect is determined, the processor 204 may establish evidence of the disparate outcome or the disparate treatment. Details related to the evidence of the disparate outcome, or the disparate treatment are further illustrated, for example, in FIG. 4.

At block 314, an operation of algorithmic monoculture determination may be executed. In an embodiment, the processor 204 may be configured to determine whether the computing algorithm suffers from the algorithmic monoculture, based on the estimated causal effect, to detect bias in the computing algorithm. It may be appreciated that the algorithmic monoculture may be a repeated usage of a particular computing algorithm without identification of drawbacks associated with the particular computing algorithm. For example, just because the computing algorithm may be achieving state-of-the-art results, people may tend to use the computing algorithm without consideration of an appropriateness of the computing algorithm for a certain scenario. Therefore, if test dataset is out of distribution, that is, the training and test data sets are drastically different, then the use of the computing algorithm may lead to unexpected results. Once the estimated causal effect is determined, the processor 204 may determine whether the computing algorithm suffers from the algorithmic monoculture. The determination of whether the computing algorithm suffers from the algorithmic monoculture is described further, for example, in FIG. 4.

At block 316, an operation of information rendering may be executed. In an embodiment, the processor 204 may be configured to render information indicative of whether the computing algorithm suffers from the algorithmic monoculture. The information indicative of whether the computing algorithm suffers from the algorithmic monoculture may be rendered on a display screen such as, the display screen 212 of FIG. 2. Thus, the user 114 may be notified whether the computing algorithm suffers from the algorithmic monoculture. Based on the indication that the computing algorithm suffers from the algorithmic monoculture, the user 114 may choose to evaluate the computing algorithm in detail.

FIG. 4 is a diagram that illustrates a flowchart of an example method for estimation of causal effect on computing algorithm, in accordance with an embodiment of the disclosure. FIG. 4 is described in conjunction with elements from FIG. 1, FIG. 2, and FIG. 3. With reference to FIG. 4, there is shown a flowchart 400. The method illustrated in the flowchart 400 may start at 402 and may be performed by any suitable system, apparatus, or device, such as, by the example electronic device 102 of FIG. 1, or the processor 204 of FIG. 2. Although illustrated with discrete blocks, the steps and operations associated with one or more of the blocks of the flowchart 400 may be divided into additional blocks, combined into fewer blocks, or eliminated, depending on the particular implementation.

At block 402, a natural direct effect, a natural indirect effect, and a spurious effect may be determined, based on the estimated causal effect. The determination of whether the computing algorithm suffers from the algorithmic monoculture may be further based on the determined natural direct effect, the natural indirect effect, and the spurious effect. In an embodiment, the processor 204 may be configured to determine the natural direct effect, the natural indirect effect, and the spurious effect based on the estimated causal effect, wherein the determination of whether the computing algorithm suffers from the algorithmic monoculture may be further based on the determined natural direct effect, the natural indirect effect, and the spurious effect.

In an example, let "X" and "Y" be the set of variables and "u" be a unit. Potential response of the variable "Y" to an action (for example, X=x), denoted by "$Y_x(u)$" may be a solution for "Y" of system of equations "$F_x$", where mechanisms of "X" may be replaced with "x". That is, "$Y_x(u)$" may denote a solution of "Y" in a sub-model "$M_x$" of a SCM "M". It may be appreciated that a counterfactual sentence, such as, "the value Y would have been obtained, had X been x for unit U equal to u" may be interpreted as the potential response "$Y_x(u)$".

It may be noted that a total effect (TE) may be defined as a difference in an outcome "Y" when setting the variable "X" to "x1" to the outcome "Y" when the setting variable "X" to "x0". TE may be determined according to an expression (5):

$$TE_{x0,x1}(y) = P(y_{x1}) - P(y_{x0}) \tag{5}$$

where, "$TE_{x0,x1}(y)$" may be the total effect when the variable "X" is set to "x1" and when the variable "X" is set to "x0". Further, experimental spurious effect may be an average difference in the outcome "Y" when the variable "X" is equal to "x" by intervention and is counterfactually compared to simply observing that "X" is equal to "x". The experimental spurious effect may be determined according to an expression (6):

$$ExpSE_x(y) = P(y_x) - P(y_x|x) \tag{6}$$

where, "$ExpSE_x(y)$" may be the experimental spurious effect.

It may be further noted that the natural direct effect (NDE) may correspond to a difference of the outcome "Y" changes when the variable "X" is set to "x1" while keeping mediator variables "W" the same (i.e., at whatever value that the mediator variables "W" would have taken had "X" been set to "x0"), compared to setting the variable "X" to "x0" by intervention. The NDE may be determined according to an expression (7):

$$NDE_{x0,x1}(y) = P(y_{x1}, w_{x0}) - P(y_{x0}) \tag{7}$$

where the "$NDE_{x0,x1}(y)$" may be the natural direct effect. The natural indirect effect may follow similar logic while flipping the sources of variations as described in an expression (8):

$$NIE_{x1,x0}(y) = P(y_{x1}, w_{x0}) - P(y_{x1}) \tag{8}$$

where the "$NIE_{x1,x0}(y)$" may be the natural indirect effect. The processor 204 may determine the spurious effect (SE), the natural direct effect (NDE), and the natural indirect effect (NIE) according to the expressions (6), (7), and (8) respectively.

At block 404, whether the natural direct effect (NDE) is non-zero may be determined. In an embodiment, the processor 204 may be configured to determine whether the natural direct effect (NDE) is non-zero. As discussed, the NDE may be determined from the expression (7). Thereafter, in an example, a comparator may be used to determine whether the natural direct effect (NDE) is non-zero. In case the natural direct effect (NDE) is non-zero, control may pass to block 406.

At block 406, evidence of a disparate treatment may be determined based on the determination that the natural direct effect is non-zero. In an embodiment, the processor 204 may be configured to determine the evidence of the disparate treatment based on the determination that the natural direct effect is non-zero. As discussed, the disparate treatment may ensure that a protected attribute may not have the direct effect on the outcome. Thus, in case the natural direct effect is non-zero, then the evidence of the disparate treatment may be determined. In an example, the NDE may be "0.54", as determined from the expression (7). Thus, the evidence of the disparate treatment may be determined. It may be noted that in case the natural direct effect (NDE) is zero, then control may pass to block 408.

At block 408, whether the natural indirect effect is non-zero may be determined. In an embodiment, the processor 204 may be configured to determine whether the natural indirect effect (NIE) is non-zero. As discussed, the NIE may be determined according to the expression (8). The determined NIE may be compared to zero to determine whether the determined NIE is non-zero. In case the determined NIE is non-zero, control may pass to block 410.

At block 410, evidence of the disparate treatment may be determined based on the determination that the natural direct effect is zero and the natural indirect effect is non-zero. In an embodiment, the processor 204 may be configured to determine the evidence of the disparate treatment based on the determination that the natural direct effect is zero and the natural indirect effect is non-zero. In an example, the NDE may be zero and the NIE may be "0.65", as determined from the expressions (7) and (8), respectively. Thus, the evidence of the disparate treatment may be determined. In case the determined NIE is zero (and NDE is also zero, as determined at block 404), then control may pass to block 412.

At block 412, whether the spurious effect (SE) is zero may be determined. In an embodiment, the processor 204 may be configured to determine whether the spurious effect (SE) is non-zero. It may be appreciated that the SE may be generated due to variations that may causally precede the input variable "X". That is, the SE may be due to presence of an unseen factor such as, a presence of confounder variables, which may affect the input variables. As discussed, the SE may be determined according to the expression (6). The determined SE may be checked to determine whether the SE is non-zero. In case the SE is non-zero, control may pass to block 416.

At block 414, an evidence of a disparate treatment may be determined based on the determination that the natural direct effect is zero, the natural indirect effect is zero, and the spurious effect is non-zero. In an embodiment, the processor 204 may be configured to determine the evidence of the disparate treatment based on the determination that the natural direct effect is zero, the natural indirect effect is zero, and the spurious effect is non-zero. In an example, the NDE may be zero, the NIE may be zero, and the SE may be "0.7", as determined from the expressions (6), (7), and (8), respectively. Thus, the evidence of the disparate treatment may be determined. However, in case the SE is zero, then control may pass to block 416.

At block 416, the computing algorithm may be determined to be associated with no evidence of a disparate treatment or no evidence of a disparate outcome, based on the determination that the natural direct effect is zero, the natural indirect effect is zero, and the spurious effect is zero. In an embodiment, the processor 204 may be configured to determine that the computing algorithm may be associated with no evidence of the disparate treatment or no evidence of the disparate outcome, based on the determination that the natural direct effect is zero, the natural indirect effect is zero, and the spurious effect is zero. In an example, the SE, the NDE, and the NIE may be zero, as determined from the expressions (6), (7), and (8) respectively. Thus, there may be no evidence of the disparate treatment or the disparate outcome for the computing algorithm.

In an example, the familiarity of the computing algorithm "F" may be "1" when the computing algorithm "A" is familiar to a user "u" such as, the user 114. The familiarity of the computing algorithm "F" may be "0" when the computing algorithm "A" is unfamiliar to the user "u" such as, the user 114. In order to compute the NIE, the NDE, and the SE, all possible values of "F" for all users in factual and counterfactual scenarios may be needed to be considered. Moreover, in case the algorithm "A" is used, then "A" may be assigned as "1". In case the algorithm "A" is not used, then "A" may be assigned as "0". Furthermore, the outcome "Y" may be assigned as "1" in case a person is labeled as an imposter, and the outcome "Y" may be assigned as "0" otherwise.

Expectation value of "Y" for various conditions of "A" and "F" is presented in Table 1, as follows:

Table 1: Exemplary expectation value of the outcome "Y"

| A | F | E (Y, A=a, F=f) |
|---|---|---|
| 1 | 1 | 0.8 |

(continued)

| A | F | E (Y, A=a, F=f) |
|---|---|---|
| 1 | 0 | 0.4 |
| 0 | 1 | 0.3 |
| 0 | 0 | 0.2 |

For example, with reference to Table 1, it may be observed thatthe expectation value of the outcome "Y" when the computing algorithm "A" is "1" and the familiarity of the computing algorithm "F" is "1" may be "0.8". The expectation value of the outcome "Y" when the computing algorithm "A" is "1" and the familiarity of the computing algorithm "F" is "0" may be "0.4". The expectation value of the outcome "Y" when the computing algorithm "A" is "0" and the familiarity of the computing algorithm "F" is "1" may be "0.3". The expectation value of the outcome "Y" when the computing algorithm "A" is "0" and the familiarity of the computing algorithm "F" is "0" may be "0.2".

Expectation value of "Y" in case of occurrence of an event "A" equal to "a" is presented in Table 2, as follows:

Table 2: Exemplary expectation value of the outcome "Y" in case of occurrence of an event "A" equal to "a"

| A | E (Y|A=a) |
|---|---|
| 0 | 0.4 |
| 1 | 0.75 |

For example, with reference to Table 2, it may be observed thatthe expectation value of the outcome "Y" when the computing algorithm "A" is unused may be "0.4". It may be observed that the expectation value of the outcome "Y" when the computing algorithm "A" is used may be "0.75".

It should be noted that data provided in Table 1 and Table 2 may merely be taken as an example and may not be construed as limiting the present disclosure.

The NDE for the present example may be determined based on replacement of values from the Table 1 in the expression (7), as shown in an expression (9):

$$NDE = (0.40 - 0.20) \times (1 - 0.40) + (0.80 - 0.30) \times 0.40 \qquad (9)$$

Thus, NDE may be determined as "0.32" from the expression (9). The NIE for the present example may be determined based on replacement of values from the Table 1 and Table 2 in the expression (8), as shown in an expression (10):

$$NIE = (0.75 - 0.40) \times (0.30 - 0.20) \qquad (10)$$

Thus, NIE may be determined as "0.035" from the expression (10). The TE for the present example may be determined based on replacement of values from the Table 1 and Table 2 in the expression (5), as shown in an expression (11):

$$TE = 0.80 \times 0.75 + 0.40 \times 0.25 - (0.30 \times 0.40 + 0.20 \times 0.60) \qquad (11)$$

Thus, TE may be determined as "0.46" from the expression (11). The SE for the present example may be determined based on replacement of values from the Table 1 and Table 2 in the expression (6), as shown in an expression (12):

$$SE = 0.46 - 0.35 \qquad (12)$$

Thus, SE may be determined as "0.11" from the expression (12). As NDE, NIE, and SE are all non-zero, evidence of the disparate treatment and the disparate impact may be determined. Thus, in current example, the computing algorithm may suffer from the algorithmic monoculture leading to homogenization of the outcome. Control may pass to end.

The disclosed method and the electronic device 102 may thus, identify the sources of algorithmic monoculture by leveraging causal graphs. Moreover, the direct effect, the indirect effect, and the spurious effect associated with algorithmic monoculture may be covered. The disclosed method may be applicable to a variety of computing algorithms that may be applicable to machine learning (ML) models, software applications, and the like. The disclosed method may address the algorithmic monoculture based on an identification of an effect of popularity bias that may lead to unethical decisions. That is, the disclosed method may indicate how a familiarity associated with the computing algorithm or a mere fact that the computing algorithm is having a high demand or a case where the computing algorithm is endorsed by leading researchers may lead to unethical decisions. The technique of the disclosed method may be software language or framework agnostic. That is, the disclosed method may be independent of a language in which the computing algorithm may have been proposed originally. For example, the disclosed method may be applied to a computing algorithm originally written in any deep learning frameworks. Moreover, the disclosed method and the electronic device 102 may be extended to quantify adverse consequences associated with an excessive usage of a hardware or physical commodity, so that appropriate actions may be take in the hindsight or foresight as applicable.

Although the flowchart 400 is illustrated as discrete operations, such as 402, 404, 406, 408, 410, 412, 414, and 416. However, in certain embodiments, such discrete operations may be further divided into additional operations, combined into fewer operations, or eliminated, depending on the particular implementation without detracting from the essence of the disclosed embodiments.

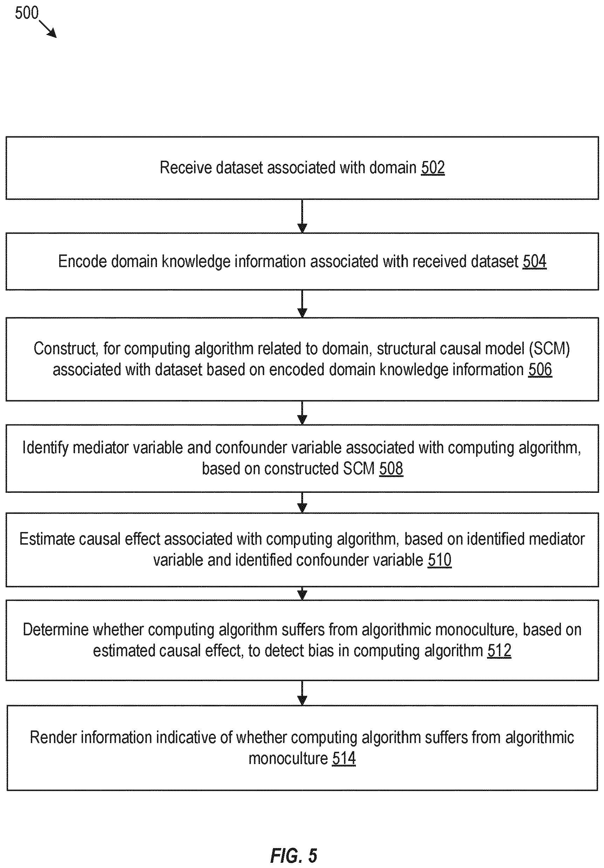

FIG. 5 is a diagram that illustrates a flowchart of an example method for detection of algorithmic monoculture based on estimation of causal effect on computing algorithm, in accordance with an embodiment of the disclosure. FIG. 5 is described in conjunction with elements from FIG. 1, FIG. 2, FIG. 3, and FIG. 4. With reference to FIG. 5, there is shown a flowchart 500. The method illustrated in the flowchart 500 may start at 502 and may be performed by any suitable system, apparatus, or device, such as, by the example electronic device 102 of FIG. 1, or the processor 204 of FIG. 2. Although illustrated with discrete blocks, the steps and operations associated with one or more of the blocks of the flowchart 500 may be divided into additional blocks, combined into fewer blocks, or eliminated, depending on the particular implementation.

At 502, the dataset, for example, the first dataset 112A associated with the domain, may be received. In an embodiment, the processor 204 may be configured to receive the dataset associated with the domain. Details related to reception of the dataset are further provided, for example, in FIG. 3 (at 302).

At 504, the domain knowledge information associated with the received dataset may be encoded. In an embodiment, the processor 204 may be configured to encode domain knowledge information associated with the received dataset. Details related to the encoding of the received dataset are further provided, for example, in FIG. 3 (at 304).

At 506, the structural causal model (SCM) 108 associated with the dataset may be constructed, for the computing algorithm related to the domain, based on the encoded domain knowledge information. In an embodiment, the processor 204 may be configured to construct, for the computing algorithm related to the domain, the structural causal model (SCM) 108 associated with the dataset based on the encoded domain knowledge information. Details related to SCM 108 are further provided, for example, in FIG. 3 (at 306).

At 508, the mediator variable and the confounder variable associated with the computing algorithm may be identified based on the constructed SCM 108. In an embodiment, the processor 204 maybe configured to identify the mediator variable and the confounder variable associated with the computing algorithm, based on the constructed SCM 108. Details related to the mediator variable and the confounder variable are further provided, for example, in FIG. 3 (at 308).

At 510, the causal effect associated with the computing algorithm may be estimated based on the identified mediator variable and the identified confounder variable. In an embodiment, the processor 204 may be configured to estimate the causal effect associated with the computing algorithm, based on the identified mediator variable and the identified confounder variable. Details related to the causal effect estimation are further provided, for example, in FIG. 3 (at 310).

At 512, whether the computing algorithm suffers from the algorithmic monoculture may be determined based on the estimated causal effect, to detect bias in the computing algorithm. In an embodiment, the processor 204 may be configured to determine whether the computing algorithm suffers from the algorithmic monoculture, based on the estimated causal effect, to detect bias in the computing algorithm. Details related to the algorithmic monoculture are further provided, for example, in FIG. 3 (at 312).

At 514, the information indicative of whether the computing algorithm suffers from the algorithmic monoculture may be rendered. In an embodiment, the processor 204 may be configured to render information indicative of whether the computing algorithm suffers from the algorithmic monoculture. Details related to the rendering of the information are further provided, for example, in FIG. 3 (at 314). Control may pass to end.

Although the flowchart 500 is illustrated as discrete operations, such as 502, 504, 506, 508, 510, 512, and 514.

However, in certain embodiments, such discrete operations may be further divided into additional operations, combined into fewer operations, or eliminated, depending on the particular implementation without detracting from the essence of the disclosed embodiments.

The disclosed electronic device 102 and the disclosed method may detect the algorithmic bias based on a popularity of the computing algorithm that may be used in machine learning models, software applications, and the like. Moreover, effects of the software portability and related technical issues may be disentangled from the algorithmic bias that may arise from the familiarity and the popularity of computing algorithm. Thus, ethical concerns like the homogenization of the outcome may be mitigated. Furthermore, the disclosed method may be extended to uncover issues in domains where the usage of a particular hardware or a physical commodity repeatedly may lead to similar results or outcomes. In an example, a particular fertilizer or a farming machinery may have been used in a location "A" for obtaining better crop yields. A farmer associated with a location "B" may simply use the particular fertilizer or the farming machinery in location "B", based on an information that the particular fertilizer or the farming machinery may have been used in the location "A" for obtaining better crop yields. The farmer associated with the location "B" may not know whether the particular fertilizer or the farming machinery should be used in the location "B". That is, the particular fertilizer or the farming machinery used by the farmer may be due prevalence of an agricultural monoculture that may be subject to catastrophic failure. The disclosed method may mitigate aforesaid issues by quantifying the natural, direct, and spurious effects associated with a use of a particular fertilizer or a farming machinery on a crop yield, better farming practices may be suggested.

Various embodiments of the disclosure may provide one or more non-transitory computer-readable storage media configured to store instructions that, in response to being executed, cause a system (such as, the example electronic device 102) to perform operations. The operations may include receiving a dataset (such as, the first dataset 112A of FIG. 1) associated with a domain. The operations may further include encoding domain knowledge information associated with the received dataset (such as, the first dataset 112A of FIG. 1). The operations may further include constructing, for a computing algorithm related to the domain, a structural causal model (SCM) (such as, the SCM 108 of FIG. 1) associated with the dataset (such as, the first dataset 112A of FIG. 1) based on the encoded domain knowledge information. The operations may further include identifying a mediator variable and a confounder variable associated with the computing algorithm, based on the constructed SCM (such as, the SCM 108 of FIG. 1). The operations may further include estimating a causal effect associated with the computing algorithm, based on the identified mediator variable and the identified confounder variable. The operations may further include determining whether the computing algorithm suffers from an algorithmic monoculture, based on the estimated causal effect, to detect bias in the computing algorithm. The operations may further include rendering information indicative of whether the computing algorithm suffers from the algorithmic monoculture.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the electronic device 102. In some embodiments, the different components, modules, engines, and services described in the present disclosure may be implemented as objects or processes that execute on the electronic device 102 (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any electronic device 102 as previously defined in the present disclosure, or any module or combination of modulates running on the electronic device 102.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc."

is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, executed by a processor, comprising:

   receiving a dataset associated with a domain;
   encoding domain knowledge information associated with the received dataset;
   constructing, for a computing algorithm related to the domain, a structural causal model (SCM) associated with the dataset based on the encoded domain knowledge information;
   identifying a mediator variable and a confounder variable associated with the computing algorithm, based on the constructed SCM;
   estimating a causal effect associated with the computing algorithm, based on the identified mediator variable and the identified confounder variable;
   determining whether the computing algorithm suffers from an algorithmic monoculture, based on the estimated causal effect, to detect bias in the computing algorithm; and
   rendering information indicative of whether the computing algorithm suffers from the algorithmic monoculture.

2. The method according to claim 1, further comprising:

   determining information associated with an observed variable and an unobserved variable associated with the domain; and
   identifying an input variable and an output variable associated with a problem area associated with the domain, wherein
   the encoding of the domain knowledge information is further based on the determined information associated with the observed variable and the unobserved variable and the identified input variable and the outputvariable.

3. The method according to claim 1, wherein the SCM is constructed based on at least one of the computing algorithm associated with the SCM, a number of citations of the computing algorithm, a confounder variable associated with the computing algorithm, a probability that the computing algorithm is used, an outcome of the computing algorithm, or a familiarity of the computing algorithm.

4. The method according to claim 3, wherein the SCM corresponds to a directed acyclic graph that indicates interdependencies in variables associated with the computing algorithm, based on the encoded domain knowledge information.

5. The method according to claim 3, further comprising:

   determining one or more variables associated with a disparate outcome or a disparate treatment associated with the computing algorithm;
   computing a direct effect, an indirect effect, and a spurious effect of each of the determined one or more variables based on the SCM; and
   establishing an evidence of the disparate outcome or the disparate treatment, based on the computed direct effect, indirect effect, and the spurious effect.

6. The method according to claim 1, wherein the mediator variable is a variable that affects an input variable associated with the computing algorithm, and the confounder variable is a variable that affects the input variable and an output variable associated with the computing algorithm.

7. The method according to claim 1, further comprising:
determining a natural direct effect, a natural indirect effect, and a spurious effect based on the estimated causal effect, wherein
the determination of whether the computing algorithm suffers from the algorithmic monoculture is further based on the determined natural direct effect, the natural indirect effect, and the spurious effect.

8. The method according to claim 7, further comprising:

    determining whether the natural direct effect is non-zero; and
    determining an evidence of a disparate treatment based on the determination that the natural direct effect is non-zero.

9. The method according to claim 7, further comprising:

    determining whether the natural direct effect is zero;
    determining whether the natural indirect effect is non-zero; and
    determining an evidence of a disparate treatment based on the determination that the natural direct effect is zero and the natural indirect effect is non-zero.

10. The method according to claim 7, further comprising:

    determining whether the natural direct effect is zero;
    determining whether the natural indirect effect is zero;
    determining whether the spurious effect is non-zero; and
    determining an evidence of a disparate treatment based on the determination that the natural direct effect is zero, the natural indirect effect is zero, and the spurious effect is non-zero.

11. The method according to claim 7, further comprising:

    determining whether the natural direct effect is zero;
    determining whether the natural indirect effect is zero;
    determining whether the spurious effect is zero; and
    determining that the computing algorithm is associated with no evidence of a disparate treatment or no evidence of a disparate outcome, based on the determination that the natural direct effect is zero, the natural indirect effect is zero, and the spurious effect is zero.

12. One or more non-transitory computer-readable storage media configured to store instructions that, in response to being executed, cause an electronic device to perform operations, the operations comprising:

    receiving a dataset associated with a domain;
    encoding domain knowledge information associated with the received dataset;
    constructing, for a computing algorithm related to the domain, a structural causal model (SCM) associated with the dataset based on the encoded domain knowledge information;
    identifying a mediator variable and a confounder variable associated with the computing algorithm, based on the constructed SCM;
    estimating a causal effect associated with the computing algorithm, based on the identified mediator variable and the identified confounder variable;
    determining whether the computing algorithm suffers from an algorithmic monoculture, based on the estimated causal effect, to detect bias in the computing algorithm; and
    rendering information indicative of whether the computing algorithm suffers from the algorithmic monoculture.

13. An electronic device, comprising:

    receiving a dataset associated with a domain;
    encoding domain knowledge information associated with the received dataset;
    constructing, for a computing algorithm related to the domain, a structural causal model (SCM) associated with the dataset based on the encoded domain knowledge information;

identifying a mediator variable and a confounder variable associated with the computing algorithm, based on the constructed SCM;

estimating a causal effect associated with the computing algorithm, based on the identified mediator variable and the identified confounder variable;

determining whether the computing algorithm suffers from an algorithmic monoculture, based on the estimated causal effect, to detect bias in the computing algorithm; and

rendering information indicative of whether the computing algorithm suffers from the algorithmic monoculture.

*FIG. 1*

200

Communication Network 110

System 202

Electronic Device 102

Memory 206

Persistent Data Storage 208

Network Interface 214

I/O Device 210

Display Screen 212

Processor 204

Structural Causal Model (SCM) 108

*FIG. 2*

FIG. 3

400

Determine natural direct effect (NDE), natural indirect effect (NIE), and spurious effect (SE) based on estimated causal effect, where determination of whether computing algorithm suffers from algorithmic monoculture is further based on determined natural direct effect, natural indirect effect, and spurious effect 402

Evidence of Disparate Treatment 406 — No — Is NDE = 0? 404

Yes

Evidence of Disparate Treatment 410 — No — Is NIE = 0? 408

Yes

Evidence of Disparate Treatment 414 — No — Is SE = 0? 412

Yes

No Evidence of Disparate Treatment or Disparate Outcome 416

*FIG. 4*

500

Receive dataset associated with domain 502

Encode domain knowledge information associated with received dataset 504

Construct, for computing algorithm related to domain, structural causal model (SCM) associated with dataset based on encoded domain knowledge information 506

Identify mediator variable and confounder variable associated with computing algorithm, based on constructed SCM 508

Estimate causal effect associated with computing algorithm, based on identified mediator variable and identified confounder variable 510

Determine whether computing algorithm suffers from algorithmic monoculture, based on estimated causal effect, to detect bias in computing algorithm 512

Render information indicative of whether computing algorithm suffers from algorithmic monoculture 514

*FIG. 5*

**EP 4 439 402 A1**

Europäisches
Patentamt

European
Patent Office

Office européen
des brevets

**EUROPEAN SEARCH REPORT**

Application Number

EP 23 20 8163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/101187 A1 (MALUR SRINIVASAN RAMYA [US] ET AL) 31 March 2022 (2022-03-31) * claims 1, 3, 6 * * paragraph [0036] – paragraph [0037] * * paragraph [0032] * * paragraph [0024] * * paragraph [0042] * * paragraph [0006] * * paragraph [0034] * * figure 1B * ----- -/-- | 1-13 | INV. G06N5/022 G06N5/045 G06N7/01 G06N20/00 |

TECHNICAL FIELDS
SEARCHED (IPC)

G06N

The present search report has been drawn up for all claims

| Place of search | Date of completion of the search | Examiner |
|---|---|---|
| The Hague | 25 March 2024 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

**EP 23 20 8163**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SRINIVASAN RAMYA ET AL: "Quantifying Confounding Bias in AI Generated Art: A Case Study", 2021 IEEE INTERNATIONAL CONFERENCE ON SYSTEMS, MAN, AND CYBERNETICS (SMC), IEEE, 17 October 2021 (2021-10-17), pages 1775-1782, XP033998371, DOI: 10.1109/SMC52423.2021.9658705 [retrieved on 2021-12-21] * section 5.1; page 1779, column 1, line 5 – line 6 * * page 1779, column 2, line 1 – line 3 * * section 5.2; page 1779, column 2, line 7 – line 10 * * page 1777, column 1, line 3 – line 7 * * page 1777, column 1, line 13 – line 17 * * page 1782, column 1, line 8 – line 10 * * page 1778, column 2, line 1 – line 3 * * page 1777, column 1, line 38 – line 39 * * figure 2 * * page 1777, column 1, line 48 – line 50 * * page 1778, column 1, line 15 – line 16 * * Equations 1, 5 * * section 4; page 1778, column 1, line 1 – line 3 * * page 1778, column 2, line 51 – line 53 * * section 4.3; page 1779, column 1, line 18 – line 21 * * section 5; page 1779, column 1, line 1 – line 2 * | 1-13 | |

-----

-/--

The present search report has been drawn up for all claims

| Place of search | Date of completion of the search | Examiner |
|---|---|---|
| The Hague | 25 March 2024 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 23 20 8163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SRINIVASAN RAMYA ET AL: "Biases in Generative Art A Causal Look from the Lens of Art History", PROCEEDINGS OF THE 2021 ACM CONFERENCE ON FAIRNESS, ACCOUNTABILITY, AND TRANSPARENCY, ACMPUB27, NEW YORK, NY, USA, 3 March 2021 (2021-03-03), pages 41-51, XP058525779, DOI: 10.1145/3442188.3445869 ISBN: 978-1-4503-8309-7 * the whole document * ----- | 1-13 | |

TECHNICAL FIELDS
SEARCHED (IPC)

The present search report has been drawn up for all claims

| Place of search | Date of completion of the search | Examiner |
|---|---|---|
| The Hague | 25 March 2024 | Tidriri, Khaoula |

EPO FORM 1503 03.82 (P04C01)

**ANNEX TO THE EUROPEAN SEARCH REPORT
ON EUROPEAN PATENT APPLICATION NO.**

EP 23 20 8163

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | Publication date | Patent family member(s) | | Publication date |
|---|---|---|---|---|
| US 2022101187 A1 | 31-03-2022 | EP | 3975071 A1 | 30-03-2022 |
| | | JP | 2022056367 A | 08-04-2022 |
| | | US | 2022101187 A1 | 31-03-2022 |

EPO FORM P0459

For more details about this annex : see Official Journal of the European Patent Office, No. 12/82